# EUROPEAN PATENT SPECIFICATION

(11) **EP 0 574 462 B1**
(45) Date of publication and mention of the grant of the patent: **07.01.1998**
(21) Application number: 92905825.3
(22) Date of filing: 22.01.1992
(51) Int. Cl.: G02B 6/38

(54) **FIBRE OPTICS CONNECTOR AND A METHOD OF MAKING THE SAME**
FIBEROPTISCHER KOPPLER UND VERFAHREN ZU DESSEN HERSTELLUNG
RACCORD POUR FIBRE OPTIQUE ET SON PROCEDE DE PRODUCTION

(30) Priority: 31.01.1991 GB 9102147; 12.12.1991 GB 9126364
(43) Date of publication of application: 22.12.1993
(73) Proprietor: THE WHITAKER CORPORATION, Wilmington, Delaware 19808 (US)
(72) Inventor: VAN WOESIK, Egbertus Theodorus Constantius Maria, NL-5235 NN 's-Hertogenbosch (NL)
(74) Representative: Warren, Keith Stanley
(86) International application number: US9200516
(87) International publication number: WO9214179

(56) References cited:
- EP-A- 374 939
- WO-A-87/07035

## Description

This invention relates to a fibre optic connector comprising a plug housing having a front mating end and a rear fibre receiving end, said front mating end having a bore carrying a short length of optical fibre having a front finished end and an inner end within the bore.

Optical connectors as described above are used for optically connecting first and second optical fibers. The customer for such a connector, may, in many cases, be devoid of staff who are experienced in the preparation of polished optical fibre end faces which are necessary if light is to be correctly transmitted from one fibre to the other, and in any case, the necessary equipment for providing such optically polished surfaces, commonly known as mirror surfaces will not be available in the field of use of the connector.

Such an optical connector adapted for receiving a fibre under field conditions is described in WO-A-87/07035. It comprises a rigid body with an axial bore, a sleeve surrounding the rigid body and having a sleeve section, a deformable means in the sleeve section and having an axial passage aligned with the bore, an intermediate optical fibre secured in the bore having a front finished end and an inner end within the bore. The deformable means in the form of a shape memory material is constructed for radial reduction of the axial passage, thereby to grip and secure the optical fibre to be inserted through the open ends of the axial passage and sleeve section. The optical face of the fibre is abutted against the inner end of the intermediate optical fibre and the fibre is fixed in that position.

Furthermore, all plastic fibers tend to change in dimension when they are exposed to temperature fluctuation. The plastic fibre will expand in diameter and shrink in its length. The plastic fibre also includes a jacket made of a plastic material which surrounds the fibre core and cladding material which has a different linear thermal expansion than the fibre core and the cladding material. Also the linear thermal expansion of these materials varies between the manufacturers of the plastic fibre cables. The axial movement (positioning) between the fibre and the jacket can be as high as lmm, a significant axial length which, under normal circumstances of present day fibre optic connectors could take the fibre cable end out of engagement with its mating fibre.

The present invention is intended to provide a fibre optics connector that ensures good transmission properties over a wide temperature range.

A fiber optic connector in accordance with the invention is defined in claim 1.

The fibre alignment sleeve may be made of a resilient material and may be formed with a through longitudinal slit, so that the sleeve is radially expansible, the internal diameter of the sleeve being less than the overall diameter of the optical fibres, so that the sleeve resiliently grips the optical fibres. The sleeve may be provided with an external collar for guiding it through the second bore portion.

The sleeve may be made of a material having the same refractive index as the cladding of the first optical fibre, or the sleeve may be provided with a coating of the same refractive index as the cladding of the first optical fibre. The index matching may have the same refractive index as the core of the second fibre.

A fibre fixing clip may be provided for securing the second optical fibre in the housing, the clip being moveable between a first portion in the housing to allow the second optical fibre to be inserted through the second bore portion, and a second position in which the clip secures the second optical fibre in the housing.

An embodiment of the invention will now be described by way of example with reference to the accompanying drawings in which;
Figure 1 is a cross-sectional view of an alternate embodiment of the assembled connector;
Figure 2 is a cross-sectional view similar to that of Figure 1 showing only the connector plug housing;
Figure 3 is a cross-sectional view similar to that of Figures 1 and 2 showing a cross-sectional view of the assembled connector prior to the insertion of the fibre;
Figure 4 is a front plan view of the connector shown in Figure 3;
Figure 5 is a top plan view of the connector shown in Figure 3;
Figure 6 is an end view of the connector shown in Figure 3;
Figure 7 is a view similar to that of Figure 2 showing the assembly of the fibre optic connector;
Figure 8 is an enlarged side view of a fibre fixing clip of the connector;
Figure 9 is an end view of the clip shown in Figure 8;
Figure 10 is an enlarged isometric view taken from one end of a split plastics alignment sleeve for a quick termination fibre optics connector;
Figure 11 is an isometric view of the alignment sleeve taken from the other end thereof;
Figures 12 and 13 are isometric views illustrating the operation of the fibre fixing clip; and
Figure 14 is a side view of an intermediate optical fibre when prepared for assembly to the housing, one end of the fibre having been polished.

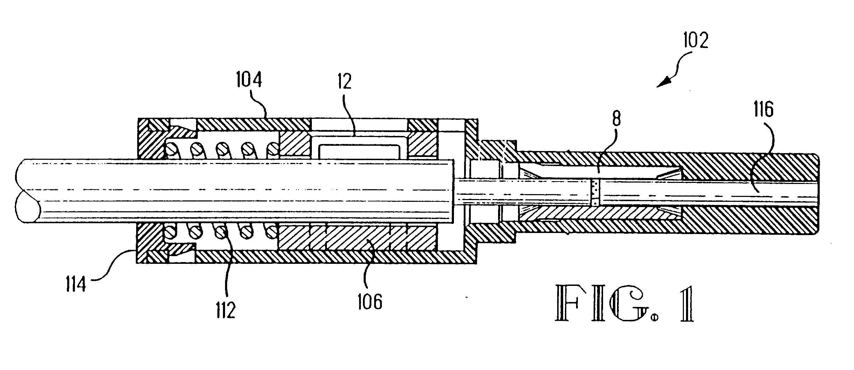

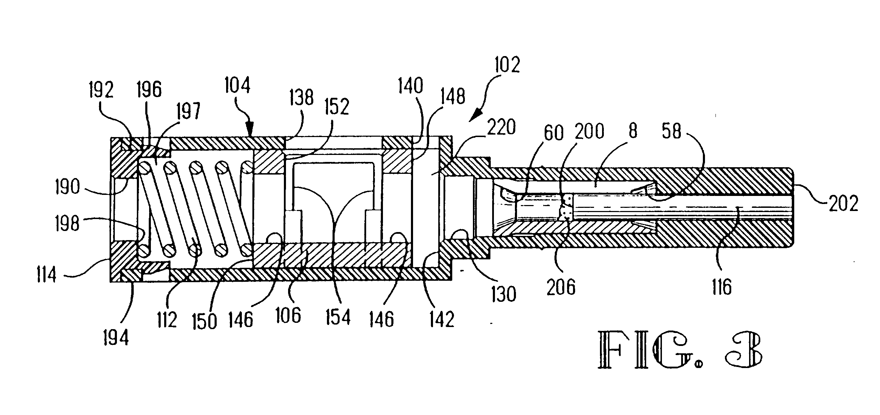

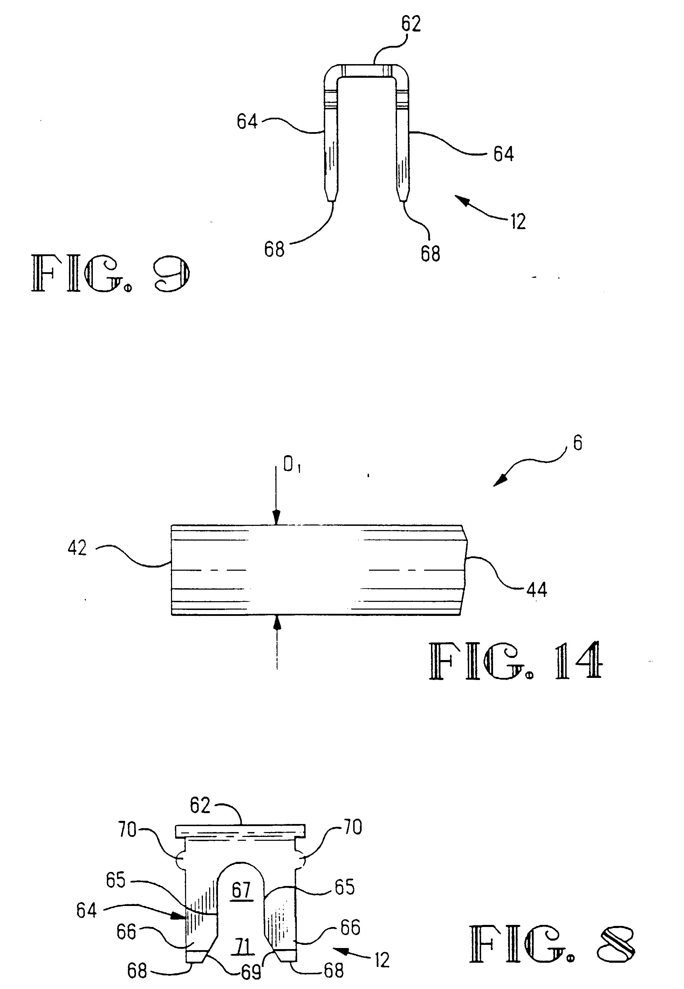

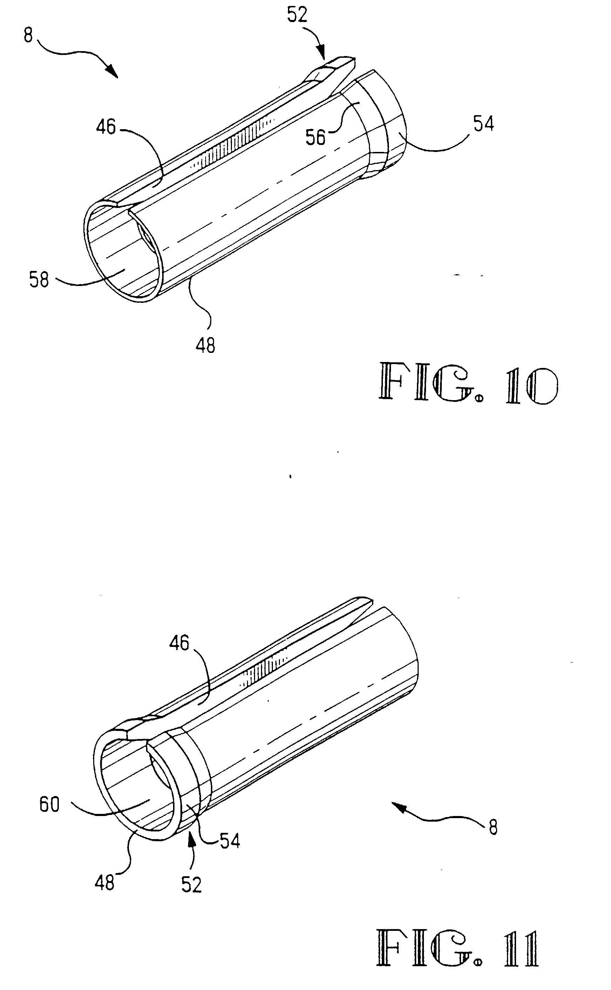

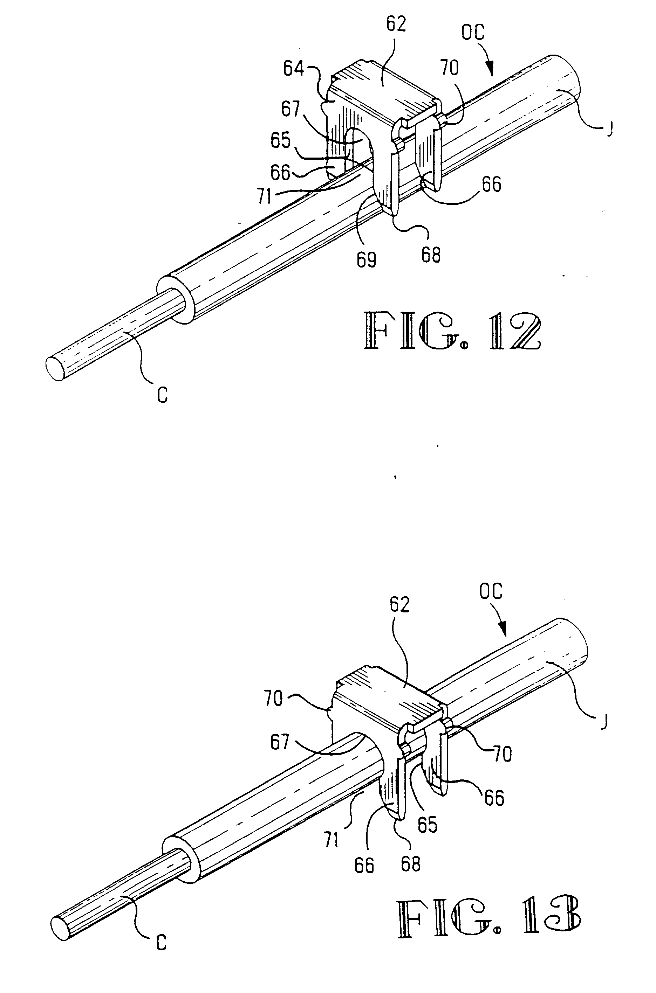

With reference now to Figures 1 - 7, the invention will be described. The optical connector is shown generally at 102 and includes a plastic housing 104, a retainer housing 106, a retainer clip 12 (identical to the clip shown and described in the embodiments of Figures 8 and 9), an alignment sleeve 8 (identical to the sleeve shown and described in Figures 10 and 11), a coil spring 12, an end plate 114, an intermediate fibre 116 and an index matching gel 206 (Figure 3).

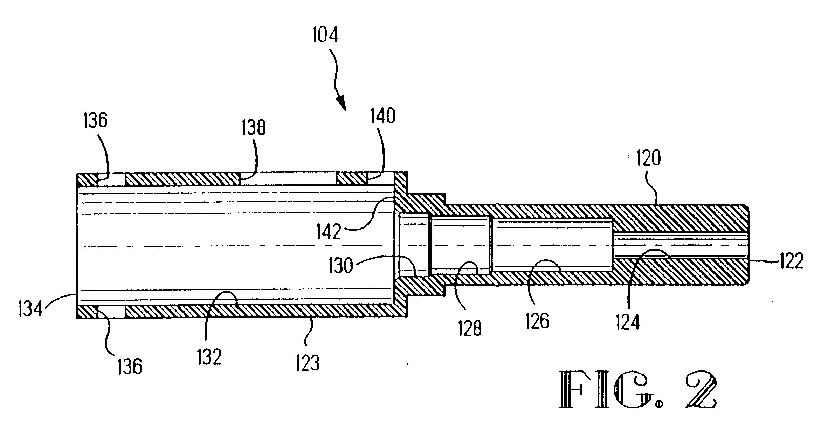

With reference now to Figure 2, the insulative plug housing 104 includes a forward cylindrical barrel portion 120 having a front face 122 for engagement with a mating fibre connector, and an enlarged open end 123 for receiving the retainer housing 106. In the preferred embodiment of the invention, the forward barrel portion 120 includes an inner bore 124 profiled for receiving a plastic fibre including the core and the cladding of a 1,000 micron plastic fibre. The barrel 120 further includes concentrically aligned cylindrical bores 126, 128 and 130, the purpose for which will be described in greater detail herein. The rear open end 123 comprises an inner cavity 132 of a generally square cross-sectional configuration. The cavity 132 is open at its end and includes an end edge 134. Adjacent to the end edge are apertures 136 which form latching surfaces to be described in greater detail herein. The upper portion of member 123 further includes apertures 138 and 140, which will also be described in greater detail herein. Finally, the inner transition between the cavity 132 and the barrel portion 120 forms an inner rearwardly facing shoulder 142.

As shown in Figure 3, the retainer housing 106 is provided with a longitudinal bore 146 which is coaxially aligned with the bore 130 and is profiled to receive the plastic fibre with the outer jacket thereon. It should also be appreciated that the retainer 106 is generally square on its cross-section and generally profiled to be received in the cavity 132. The retainer 106 has a forward face 148 facing the surface 142 whereas a rear face 150 is directed towards the open end. The retainer housing 106 further comprises an open aperture 152 profiled to receive the retainer 108 therethrough, and when the retainer is in the position shown in Figure 3, the opening 152 is aligned with the opening 138 to receive the retainer therethrough. Finally the retainer housing 106 includes two grooves 154 on each side extending from the opening 152 and are profiled to receive the retainer 8 upon insertion therein.

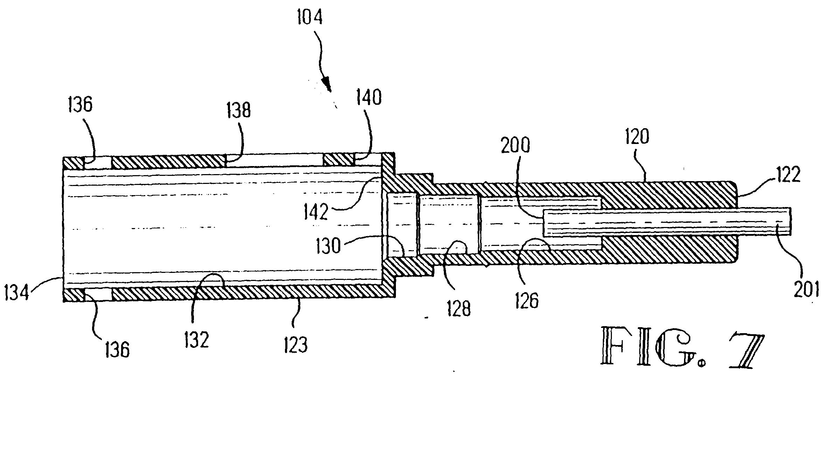

With reference now to Figure 7, the assembly of the above described connector will be explained in greater detail. An intermediate piece of fibre 116 is polished at its inner end face 200 and inserted into the bore 124 to the position shown in Figure 7 and fixed in place, for example by means of an adhesive to retain to fibre in this position. It should be appreciated that a portion 201 of the intermediate fibre 116 extends beyond the front face 122 of the plug portion 120. When the adhesive has cured, the fibre 116 is secured in the position shown in Figure 7, the unfinished end 201 of the fibre 116 can be machine polished so that the fibre 116 has a forward face 202 (Figure 3) which is flush with the forward surface 122. The alignment sleeve 8 is now inserted into the plug portion 120 with the end 58 inserted first such that it resides in the bore portion 126 (Figure 2) while the guide collar 54 resides in the bore portion 128 (Figure 2). An index matching gel 206 is now injected against the inner polished surface 200 of the intermediate fibre 116 as best shown in Figure 22.

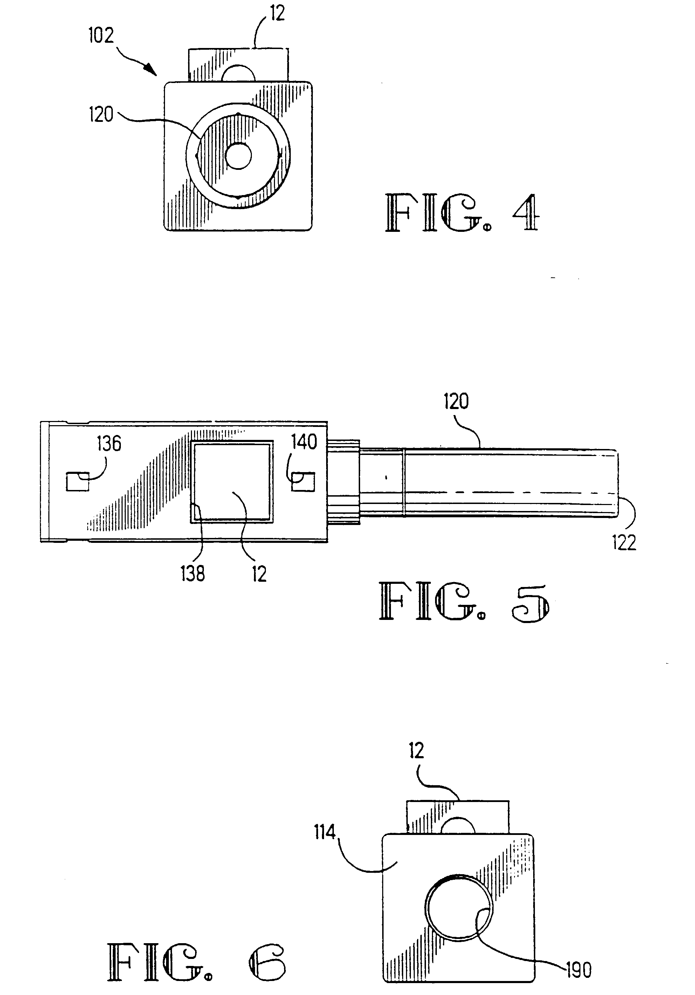

With the intermediate fibre fully positioned in place, the remainder of the connector can be assembled. The retainer housing 106 is now inserted through the open end of the plug housing 104 such that the opening 152 is in the same orientation as the aperture 138 on the upper side wall of the plug housing 104. The retainer housing 106 is moved to the position where the opening 152 and the aperture 138 are aligned. The U-shaped clip 12 is then inserted such that the openings 67 in both plate portions 64 are longitudinally aligned with the fibre-receiving bore 146, thereby positioninq the plate portions 64 within grooves 154 (Figure 3) in the retainer housing. The U-shaped clip 12 is only partially inserted at this stage into the position shown in Figure 4, which locks the retainer housing in the position shown in Figure 3, as the U-shaped clip is locked within the aperture 138 in the outer housing. The spring 112 and end cap 114 are then inserted thereby spring loading the retainer housing 106 in a forward direction. This completes the connector assembly which would be shipped to a customer for field installation.

As shown best in Figures 12 and 13, a plastic optical fibre is shown generally at OC and includes an outer insulative jacket J where the inner fibre includes an inner plastic core C. To use the connector 102 as described above, a portion of the outer jacket J only is stripped from the fibre OC thereby exposing a portion of the combined plastic fibre and cladding material. This fibre can then be inserted, stripped end first through bore 190 of the end cap 114 through the coil spring 112, through the bore 146 of the retainer housing 106 such that the stripped end of the fibre optic cable is positioned into the sleeve 8 and into abutment with the gel 206. Once the fibre cable OC is pushed as far forward as possible, the U-shaped clip 12 can then be pushed downwardly into the retainer housing such that the side edges 65 of the U-shaped clip 12 skive into the jacket only of the plastic fibre thereby fixing the longitudinal movement of the fibre. This positions the portions 66 within the grooves 154 of the retainer housing 106. It should be appreciated that when the U-shaped clip 12 is in its fully downward position, the retainer housing 106 is now free to float within the opening 132 under influence of the compression spring 112.

The intermediate optical fibre 6, which is best seen in Figure 14, has been optically polished at its rearward end 42, the forward end 44 of the fibre not having been polished. The fibre 6, may for example, be of one thousand microns in its diameter D1, taken over its cladding. In any event, the diameter of the fibre 6 is selected for close tolerance with the bore portion 16 of the connector housing 4, or the bore portion 16 is formed for close tolerance with the diameter of the fibre 6. The bore portion 16 should be exactly concentric with the plug 41.

As best seen in Figures 10 and 11, the alignment sleeve 8 which was moulded in one piece from a resilient plastics material, for example polyethersulphone, is of circular cross section and is formed with a longitudinal through slit 46 which progressively widens from the forward end 48 of the sleeve 8 towards its rear end 50. A guide collar 52 surrounds the rear end portion of the sleeve 8 and has a rearward, constant diameter, part 54 and a forwardly tapered frusto-conical part 56. The sleeve 8 has, opening into its forward end, a forwardly flared intermediate fibre receiving, mouth 58 and opening into its rear end, a cladded optical cable core receiving mouth 60. By virtue of the slit 46, the sleeve 8 is resiliently radially expansible. The normal internal diameter of the sleeve 8 is smaller than the overall diameter D1 (Figure 14) of the fibre 6.

As shown in Figures 8 and 9, the fibre fixing clip 12 which was stamped and formed from a single piece of sheet metal stock, comprises a flat base 62 from opposite edges of which depend respective fibre retention plates 64, each of which comprises a pair of legs 66 each having a tapered free end portion 68, the legs defining between them an opening 67 having parallel side edges 65. Proximate the base 62 each plate 64 has an outwardly projecting retention pip 70. The legs 66 are chamfered at 69 towards their free end portions 68 so that each pair of legs defines an outwardly flared mouth 71 communicating with the opening 67 between the legs of the pair.

Thus with the embodiment as described herein, the previously mentioned problem of pistoning between the jacket and the core and fibre has been eliminated. That is, the fibre OC can float in either direction under the influence of compression spring 112 to maintain abutting engagement between the end face of fibre OC and the intermediate fibre 116. As best shown in Figure 3, a compression space 220 is formed between surfaces 142 and 148 which is the amount of forward movement available for the retainer 106.

## Claims

1. A fibre optic connector (102) comprising a plug housing (104) having a front mating end (122) and a rear fibre receiving end, said front mating end (122) having a through bore (124) carrying a first fibre (116) having a front finished end (202) and an inner end (200) within the through bore (124), said connector (102) being characterized in that:
said housing (104) has a mechanism (106,12,112) arranged to grip a fibre to be inserted via the rear end and to bias said fibre so as to maintain end-to-end contact with said inner ends of said first fibre (116).

2. A fibre optic connector according to claim 1, wherein said housing (104) includes a rear cavity (123) and said mechanism comprises a fibre holding retainer (106) positioned within said rear cavity (123), said retainer being in communication with said through bore (124) and arranged to float within said cavity (123) whilst being biased towards said front mating ends.

3. A fibre optic connector according to claim 1 or 2, characterized in that said retainer (106) is comprised of a plastic housing, having a fiber receiving bore (146) therethrough which is coaxially aligned with said through bore (124).

4. A fibre optic connector according to any of the preceding claims, characterized in that said retainer (106) includes a holding member (12) associated with said retainer (106) arranged to fix said cable to said retainer (106).

5. A fibre optic connector according to claim 4, characterized in that said holding member (12) comprises a clip member (12) which is movable within said retainer between a fibre insertion position, to a fibre clamping position where said clip (12) grasps the jacket (J) surrounding the fibre.

6. A fibre optic connector according to claim 5, characterized in that said rear cavity (123) communicates with a side aperture (138) in said plug housing, said aperture being profiled to receive said clip member (12) therethrough such that in a fibre insertion position, said clip member (12) axially locks said retainer (106) within said cavity (123), said connector being arranged so that when said clip member (12) is moved to said fibre clamping position, said clip member (12) clears said aperture (138), and allows biased axial movement of said retainer (106).

7. A fibre optic connector according to any of claims 1-6, wherein said plug housing (104) includes an end cap (114) closing a rear open end (134) of said cavity (123), and said mechanism comprises a spring member (112) positioned between said end cap (114) and said retainer (106) for spring biasing said retainer (106) forward.

8. A fibre optic connector according to claim 1, wherein the mechanism comprises a fibre holding retainer (106), a holding member (12) to fix the fibre in the retainer (106) and a spring member (112) for spring biasing the retainer (106), the retainer (106) being free to float in the housing (104) under the influence of the spring member.

9. A fibre optic connector according to any of the preceding claims, wherein the abutting ends of said fibre and the first fibre (116) are received in a fibre alignment sleeve (8).

10. A fibre optic connector according to claim 9, wherein the fibre alignment sleeve is a circular cross-section sleeve (8) of resilient material formed with a longitudinal through slit (46), the sleeve (8) resiliently gripping said length (L) of the first optical fibre (6).

## Patentansprüche

1. Faseroptischer Verbinder (102), der ein Steckergehäuse (104) mit einem vorderen passenden Ende (122) und einem hinteren, die Faser aufnehmenden Ende umfaßt, wobei das vordere passende Ende (122) eine Durchgangsbohrung (124) aufweist, die eine erste Faser (116) mit einem polierten Vorderende (202) und einem inneren Ende (200) innerhalb der Durchgangsbohrung (124) aufweist, wobei der Verbinder (102) dadurch gekennzeichnet ist, daß das Gehäuse (104) einen Mechanismus (106, 12, 112) aufweist, der so angeordnet ist, daß er eine über das hintere Ende einzusetzende Faser ergreift und die Faser so vorspannt, daß mit dem inneren Ende der ersten Faser (116) eine Kontakt Ende-an-Ende aufrechterhalten wird.

2. Faseroptischer Verbinder nach Anspruch 1, wobei das Gehäuse (104) einen hinteren Hohlraum (123) aufweist und der Mechanismus eine innerhalb des hinteren Hohlraums (123) positionierte, die Faser haltende Halterung (106) umfaßt, wobei die Halterung mit der Durchgangsbohrung (124) in Verbindung steht und so angeordnet ist, daß sie innerhalb des Hohlraums (123) Spiel hat und dabei in Richtung des vorderen passenden Endes vorgespannt ist.

3. Faseroptischer Verbinder nach Anspruch 1 oder 2, dadurch gekennzeichnet, daß die Halterung (106) ein Kunststoffgehäuse umfaßt, durch das eine eine Faser aufnehmende Bohrung (146) geht, die zu der Durchgangsbohrung (124) koaxial ausgerichtet ist.

4. Faseroptischer Verbinder nach einem der vorhergehenden Ansprüche, dadurch gekennzeichnet, daß die Halterung (106) ein der Halterung (106) zugeordnetes Halteglied (12) enthält, das so angeordnet ist, daß es das Kabel an der Halterung (106) befestigt.

5. Faseroptischer Verbinder nach Anspruch 4, dadurch gekennzeichnet, daß das Halteglied (12) ein Clipglied (12) umfaßt, das sich innerhalb der Halterung zwischen einer Fasereinsetzposition zu einer Faserklemmposition, wo der Clip (12) den die Faser umgebenden Mantel (J) ergreift, bewegen kann.

6. Faseroptischer Verbinder nach Anspruch 5, dadurch gekennzeichnet, daß der hintere Hohlraum (123) mit einer seitlichen Öffnung (138) in dem Steckergehäuse in Verbindung steht, wobei die Öffnung ein derartiges Profil aufweist, daß sie das Clipglied (12) dort hindurch so aufnehmen kann, daß in einer Fasereinsetzposition das Clipglied (12) die Halterung (106) axial innerhalb des Hohlraums (123) verriegelt, wobei der Verbinder so angeordnet ist, daß bei Bewegung des Clipglieds (12) in die Faserklemmposition das Clipglied (12) die Öffnung (138) freigibt und eine vorgespannte axiale Bewegung der Halterung (106) gestattet.

7. Faseroptischer Verbinder nach einem der Ansprüche 1 - 6, wobei das Steckergehäuse (104) eine Endkappe (114) enthält, die ein hinteres offenes Ende (134) des Hohlraums (123) abschließt, und der Mechanismus ein Federglied (112) umfaßt, das zwischen der Endkappe (114) und der Halterung (106) positioniert ist, um die Halterung (106) mittels Federkraft nach vorn vorzuspannen.

8. Faseroptischer Verbinder nach Anspruch 1, wobei der Mechanismus eine eine Faser haltende Halterung (106), ein Halteglied (12) zum Befestigen der Faser in der Halterung (106) und ein Federglied (112), um die Halterung (106) mittels Federkraft vorzuspannen umfaßt, wobei die Halterung (106) unter der Wirkung des Federglieds im Gehäuse (104) Spiel haben kann.

9. Faseroptischer Verbinder nach einem der vorhergehenden Ansprüche, wobei die aneinanderstoßenden Enden der Faser und der ersten Faser (116) in einer Faserausrichtmuffe (8) aufgenommen werden.

10. Faseroptischer Verbinder nach Anspruch 9, wobei die Faserausrichtmuffe eine Muffe (8) aus elastischem Material mit kreisförmigem Querschnitt ist, die mit einem in Längsrichtung durchgehenden Schlitz (46) ausgebildet ist, wobei die Muffe (8) das Stück (L) der ersten optischen Faser (6) elastisch ergreift.

## Revendications

1. Connecteur (102) de fibres optiques comprenant un logement (104) de fiche possédant une extrémité d'accouplement avant (122) et une extrémité arrière de réception de fibre, ladite extrémité d'accouplement avant (122) possédant un alésage traversant (124) portant une première fibre (116) possédant une extrémité avant polie (202) et une extrémité intérieure (200) à l'intérieur de l'alésage traversant (124), ledit connecteur (102) étant caractérisé en ce que:
ledit logement (104) possède un mécanisme (106,12,112) disposé pour serrer une fibre devant être insérée par l'extrémité arrière et pour pousser ladite fibre de façon à maintenir un contact bout-à-bout avec ladite extrémité intérieure de ladite première fibre (116).

2. Connecteur de fibres optiques selon la revendication 1, dans lequel ledit logement (104) comporte une cavité arrière (123) et ledit mécanisme comprend une pièce de retenue (106) maintenant la fibre positionnée à l'intérieur de ladite cavité arrière (123), ladite pièce de retenue étant en communication avec ledit alésage traversant (124) et disposée pour présenter un jeu latéral à l'intérieur de ladite cavité (123) lorsqu'elle est poussée vers ladite extrémité d'accouplement avant.

3. Connecteur de fibres optiques selon la revendication 1 ou 2, caractérisé en ce que ladite pièce de retenue (106) est constituée d'un logement en plastique traversé par un alésage (146) de réception de fibre aligné de manière coaxiale avec ledit alésage traversant (124).

4. Connecteur de fibres optiques selon l'une quelconque des revendications précédentes, caractérisé en ce que ladite pièce de retenue (106) comporte un élément de maintien (12) associé à ladite pièce de retenue (106), disposé pour fixer ledit câble à ladite pièce de retenue (106).

5. Connecteur de fibres optiques selon la revendication 4, caractérisé en ce que ledit élément de maintien (12) comprend un élément de clip (12) mobile à l'intérieur de ladite pièce de retenue entre une position d'insertion de la fibre jusqu'à une position de blocage de la fibre dans laquelle ledit clip (12) serre la gaine (J) entourant la fibre.

6. Connecteur de fibres optiques selon la revendication 5, caractérisé en ce que ladite cavité arrière (123) communique avec un orifice latéral (138) dans ledit logement de fiche, ledit orifice étant profilé pour recevoir ledit élément de clip (12) à travers lui, de sorte que, dans une position d'insertion de la fibre, ledit élément de clip (12) verrouille axialement ladite pièce de retenue (106) à l'intérieur de ladite cavité (123), ledit connecteur étant disposé de sorte que, lorsque ledit élément de clip (12) est déplacé dans ladite position de blocage de la fibre, ledit élément de clip (12) se dégage dudit orifice (138), et permette le mouvement axial de poussée de ladite pièce de retenue (106).

7. Connecteur de fibres optiques selon l'une quelconque des revendications 1-6, dans lequel ledit logement de fiche (104) comporte un embout (114) fermant une extrémité arrière ouverte (134) de ladite cavité (123), et ledit mécanisme comprend un élément de ressort (112) positionné entre ledit embout (114) et ladite pièce de retenue (106) pour pousser par ressort ladite pièce de retenue (106) vers l'avant.

8. Connecteur de fibres optiques selon la revendication 1, dans lequel le mécanisme comprend une pièce de retenue (106) maintenant la fibre, un élément de maintien (12) pour fixer la fibre dans la pièce de retenue (106) et un élément de ressort (112) pour pousser par ressort la pièce de retenue (106), la pièce de retenue (106) étant libre de se déplacer latéralement dans le logement (104) sous l'influence de l'élément de ressort.

9. Connecteur de fibres optiques selon l'une quelconque des revendications précédentes, dans lequel les extrémités jointives de ladite fibre et de la première fibre (116) sont reçues dans un manchon (8) d'alignement de fibres.

10. Connecteur de fibres optiques selon la revendication 9, dans lequel le manchon d'alignement de fibres est un manchon (8) de section transversale circulaire en matériau élastique, avec une fente longitudinale traversante (46), le manchon (8) serrant de manière élastique ladite longueur (L) de la première fibre optique (6).
